# EUROPÄISCHE PATENTANMELDUNG

(11) **EP 1 138 430 A2**
(43) Veröffentlichungstag der Anmeldung: **04.10.2001**
(21) Anmeldenummer: 01105934.2
(22) Anmeldetag: 09.03.2001
(51) Int. Cl.: B23K 11/00, B23K 11/16, B23K 31/02, B23K 11/11, B21J 15/24

(54) **Bauteil, insbesondere für ein Fahrzeug**

(30) Priorität: 29.03.2000 DE 10015713
(71) Anmelder: Bayerische Motoren Werke Aktiengesellschaft, 80809 München (DE)
(72) Erfinder: Mieslinger, Stefan, 84034 Landshut (DE)

(57) **Zusammenfassung**

1. Bauteil, insbesondere für ein Fahrzeug.
2.1 Es ist bereits bekannt, Leichtmetallbleche durch Stanznieten mit Stahlblechen zu verbinden. Das Stanznieten erfordert jedoch relativ viel Bauraum, so dass Blechteile aus unterschiedlichen, nicht verschweißbaren Werkstoffen, nur begrenzt einsetzbar sind. Aufgabe der Erfindung ist es, ein Bauteil zu schaffen, das aus nicht miteinander verschweißbaren Werkstoffen besteht und das einfach herzustellen ist.
2.2 Dies wird dadurch erreicht, dass das eine Blech (1) aus einem Leichtmetall besteht, dass in diesem Blech (1) an vorbestimmten Befestigungsstellen (8) Nieten (4) befestigt sind, dass die Nieten (4) aus einem Werkstoff bestehen, der mit einem Werkstoff verschweißbar ist, aus dem ein an das Leichtmetallblech (1) zu befestigendes Blech (2) besteht.

## Beschreibung

Die Erfindung betrifft ein Bauteil, insbesondere für ein Fahrzeug, gemäß dem Oberbegriff des Anspruchs 1.

Es ist bereits bekannt, beispielsweise bei der Herstellung von Kraftfahrzeug-Karosserien, Leichtmetallbleche mit Stahlblechen durch Stanznieten miteinander zu verbinden. Diese Bauweise hat jedoch den Nachteil, dass zum Nieten die vorgesehenen Verbindungsstellen auf Grund der großen Werkzeuge gut zugänglich sein müssen und dadurch einen relativ großen Bauraum erfordern. Aus diesem Grund ist das Stanznieten nur begrenzt einsetzbar.

Aufgabe der Erfindung ist es, ein Bauteil, insbesondere für ein Fahrzeug zu schaffen, bei dem Leichtmetallbleche einfacher mit Stahlblechen befestigbar sind.

Diese Aufgabe wird durch die Merkmale des Anspruchs 1 gelöst.

Bei dem erfindungsgemäßen Bauteil werden vorteilhafterweise in dem Leichtmetallblech an den vorgesehenen Verbindungsstellen mit dem Stahlblech Nieten aus verschweißbarem Stahl oder dergleichen befestigt. Die vorgesehenen Befestigungsstellen am Stahlblech werden an diese Nieten angelegt und über eine Schweißverbindung an den Nieten befestigt. Die Verschweißung erfolgt vorteilhafterweise über eine Schweißzange. Da die Schweißzangen auch gekröpfte Elektroden aufweisen können, ist es möglich, auch an unzugänglicheren Stellen eine Verschweißung vorzunehmen. Vorteilhaft ist ferner, dass ein erfindungsgemäßes Bauteil am gleichen Fertigungsband wie Bauteile aus einer Stahl-Stahl-Kombination gefertigt werden kann. Im Vergleich zum bekannten Stanznieten eines Leichtmetallbleches mit einem Stahlblech sind bei dem erfindungsgemäßen Vernieten und dem nachträglichen Verschweißen kürzere Fügezeiten möglich. Bei dem erfindungsgemäßen Bauteil sind unterschiedliche Blechdickenpaarungen möglich.

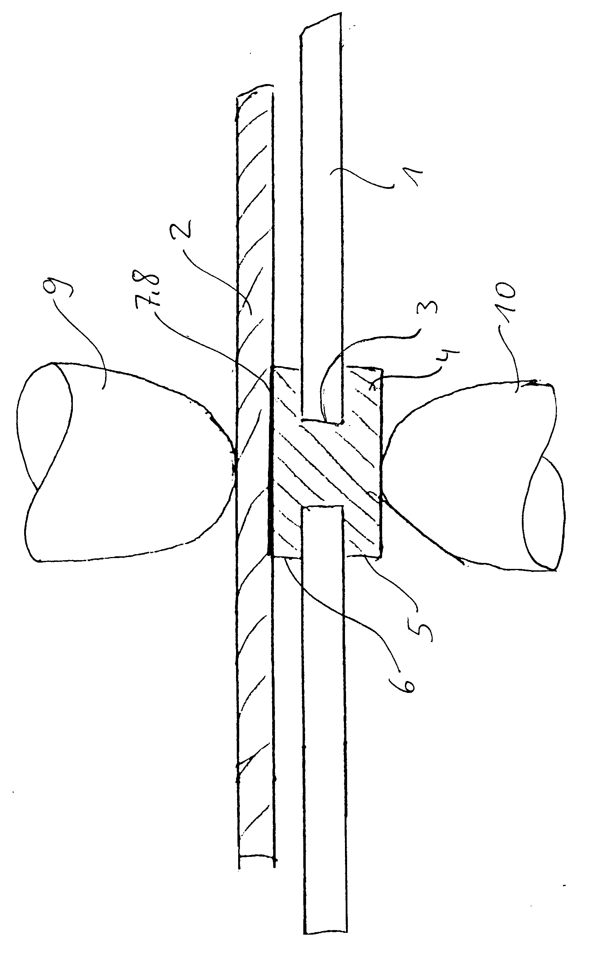

Eine Ausführungsform der Erfindung wird nachstehend anhand einer einzigen Figur beispielshalber dargestellt, die einen Längsschnitt durch zwei miteinander zu verbindende Bleche 1 und 2 zeigt. Das eine Blech 1 weist eine Durchgangsöffnung 3 auf, in der eine Niete 4 befestigt ist. Dieses Blech 1 besteht aus einem Leichtmetall, beispielsweise aus Aluminium. Die befestigte Niete 4 weist im befestigten Zustand einen Doppel-T-Querschnitt auf. In einer anderen Ausführungsform ist der Querschnitt der Niete 4 T-förmig oder weist eine andere geeignete Form auf. Dabei überdeckt jeweils ein Nietkopf 5, 6 die Durchgangsöffnung 3. Auf einer Außenoberfläche 7 des Nietkopfes 6 liegt das Blech 2 an, das wie die Niete 4 aus einemverschweißbaren Stahl besteht. In der gezeigten Ausführungsform ist die Niete 4 als eine Vollniete ausgebildet.

Zur Befestigung des Bleches 2 mit der Niete 4 wird an der vorgesehenen Befestigungsstelle 8 eine Schweißelektrode 9 einer nicht dargestellten Schweißzange auf das Stahlblech 2 und eine zu der Schweißelektrode 9 gegenüberliegende Schweißelektrode 10 auf den Nietkopf 5 der Niete 4 angeordnet, um die Niete 4 mit dem Stahlblech 2 zu verschweißen. Durch die Punktschweißung ist das Stahlblech 2 über die jeweilige Anzahl von Nieten 4 mit dem Leichtmetallblech 1 verbunden.

Bei der Herstellung einer Kraftfahrzeug-Karosserie kann dieses Befestigungsverfahren verwendet werden, um ein Dach aus einem Leichtmetall mit der restlichen Stahlkarosserie zu verbinden. Ein weiterer Anwendungsfall besteht beispielsweise darin, eine Trennwand zwischen einem Fahrgastraum und einem Kofferraum oder eine Stirnwand an der Karosserie zu befestigen.

## Patentansprüche

1. Bauteil, insbesondere für ein Fahrzeug, das aus nicht miteinander verschweißbaren Blechen aufgebaut ist, **dadurch gekennzeichnet, dass** das eine Blech (1) aus einem Leichtmetall besteht, **dass** in diesem Blech (1) an vorbestimmten Befestigungsstellen (8) Nieten (4) befestigt sind, **dass** die Nieten (4) aus einem Werkstoff bestehen, der mit einem Werkstoff verschweißbar ist, aus dem ein an das Leichtmetallblech (1) zu befestigendes Blech (2) besteht.

2. Bauteil nach Anspruch 1, **dadurch gekennzeichnet, dass** die Nieten (4) Vollnieten sind.

3. Bauteil nach den Ansprüchen 1 oder 2, **dadurch gekennzeichnet, dass** die miteinander zu verbindenden Bleche (1, 2) Teile einer Kraftfahrzeug-Karosserie sind.

4. Bauteil nach einem der vorhergehenden Ansprüche, **dadurch gekennzeichnet, dass** das Leichtmetallblech (1) Bestandteil eines Daches eines Kraftfahrzeuges ist.

5. Bauteil nach einem der vorhergehenden Ansprüche, **dadurch gekennzeichnet, dass** das Leichtmetallblech (1) eine Trennwand zwischen einem Fahrgastraum und einem Kofferraum und/oder eine Trennwand zwischen einem Fahrgastraum und einem Motorraum ist und/oder ein Bodenblech oder ein Bestandteil eines Bodenbleches ist.

6. Bauteil nach einem der vorhergehenden Ansprüche, **dadurch gekennzeichnet, dass** das Leichtmetall Aluminium und/oder mindestens eine Aluminiumlegierung enthält.
